# EUROPEAN PATENT APPLICATION

(11) **EP 2 200 135 A1**
(43) Date of publication of application: **23.06.2010**
(21) Application number: 08425808.6
(22) Date of filing: 19.12.2008
(51) Int. Cl.: H02B 1/30

(54) **Control box**

(71) Applicant: COST.E.L. S.p.A., 28043 Bellinzago (No) (IT)
(72) Inventor: Bovi, G. Luigi, 28043 Bellinzago Novarese(NO) (IT)
(74) Representative: Valentini, Giuliano

(57) **Abstract**

There is described a sheet metal control box, which includes a base element (10) and a covering element (20), a pair of side walls (30), a back wall (40), at least one front door (50) hinged to at least one of the side walls (30) and constraining means to secure the side walls to the base element and to the covering element. The constraining means include threaded pins (52) made integral by bolting with the base element (10) and with the covering element (20) and nuts (54) engaged on the pins by screwing.

## Description

### Field of the Invention

The present invention relates to a control box made of sheet metal and, in particular, to a box composed of a plurality of parts that can be assembled together.

The definition "control box" is intended here and hereunder as a box for containing switchboards and control equipment in general.

### Prior Art

Prior art control boxes essentially include two types differing from each other. A first type is composed of modular boxes, generally provided with mounting kit, which include a plurality of elements that can be assembled together to form a rigid frame structure, on which the elements that form the walls of the box and the door(s) are then assembled. Some examples describing the structure of the section bars that form the frames and the various systems for assembly of the elements are described, for example, in the patent publications EP-A2-0144955 and EP-A2-1115273.

These types of box are thus advantageous with regard to reducing dimensions for storing in warehouses and for transport, but require lengthy times and high costs during installation at the client's premises, as assembly can require a certain number of welds and/or the application of various screws in positions that are difficult to access. In particular, it is first necessary to mount the section bars of the frame on the corner elements (tripods) which generally present three arms orthogonal to one another, and then secure the section bars to the corner elements by means of welding and/or screwing. Once the frame has been assembled, with the section bars disposed along the corners of the parallelepiped shaped box, the remaining components, such as walls, hinges, doors, seals or the like, are screw-mounted.

The assembly difficulties can also cause errors which could compromise the seal of the box, thus reducing the degree of protection established by the manufacturer.

A second type is composed of free standing (or monobloc) boxes, in which each box is composed of metal sheets bent and welded together to thus form the entire box as finished product. A product thus produced can ensure a higher degree of protection with respect to modular boxes.

Free standing boxes also have generally lower costs than modular boxes and are delivered to the client ready to use, but due to their dimensions imply high storage and transport costs. A further drawback of free standing boxes lies in the difficulty of ensuring uniform painting on all inner and outer surfaces.

### Summary of the Invention

This being stated, the object of the present invention is to propose a new type of modular box which allows the steps to assemble the various components to be simplified and performed more rapidly.

Another object of the present invention is to propose a modular box capable of guaranteeing the same seal properties as a free standing box.

Yet another object of the present invention is to propose a modular box offering considerable properties of sturdiness and rigidity.

A further object of the present invention is to propose a modular box which can be produced and installed at limited costs.

These objects are achieved by the present invention due to a sheet metal control box according to claim 1. Further specific characteristics of the present invention are provided in the respective dependent claims.

A box according to the present invention includes a base element and a covering element, a pair of side walls, a back wall, at least one front door hinged to at least one of the side walls and constraining means to secure the side walls to the base element and to the covering element. The constraining means advantageously include threaded pins made integral with the base element and with the covering element and nuts engaged on the pins by screwing.

In the preferred embodiment, the base element and the covering element are quadrangular in shape and include a perimeter frame, composed of flat portions perpendicular to the axes of the threaded pins, which includes at least two opposite sides for coupling with the side walls.

The side walls in turn include flat bent portions along the sides for coupling with the base element and with the covering element. The bent portions are provided with through holes for the pins and the nuts are screwed onto the respective pins and abutted against the bent portions.

Advantageously, reinforcing portions are provided, applied at least to the base element along the sides for coupling and, in particular, at the positions of one or more threaded pins. Reinforcing portions are likewise applied to the bent portions of the side walls at the positions of one or more threaded pins.

In a possible embodiment of the present invention, at least three threaded pins are provided for each of the sides for coupling present on the base element and on the covering element. At least one of the threaded pins is advantageously disposed in a staggered position with respect to a line that joins the other two pins.

Positioning of the pins allows a particularly stiff and sturdy structure to be obtained without requiring assembly of a frame and of the relative connection elements at the corners, as usually occurs in modular boxes, while maintaining the same degree of protection typical of a free standing box.

During assembly, the pins are made integral with the base element and with the covering element by means of coupling with double ended stud in female thread elements secured to the base element and to the covering element.

To guarantee the necessary degree of protection, at least one sealing element is interposed between the bent portions of the side walls and the corresponding sides for coupling of the base element and of the covering element.

It has been found that the production of boxes according to the present invention allows a reduction in manufacturing costs with respect to free standing boxes, especially with regard to the considerably lower number of welding and grinding operations. It is also possible to limit painting costs, while ensuring more uniform painting of all the components to be assembled.

It will also be evident that modular boxes produced according to the present invention require less space in the warehouse to store the semi-finished components, as well as lower transports costs for the same number of units sold.

### Brief Description of the Drawings

Further characteristics and advantages of the present invention will be more apparent from the description below, provided by way of non-limiting example with reference to the appended drawings, wherein:
- Figure 1 is an exploded view of the components of a control box according to the present invention;
- Figure 2 is a top plan view of the base element of the box of Figure 1;
- Figure 3 is a top plan view of the covering element of the box of Figure 1;
- Figure 4 is a section view of a side wall of the box of Figure 1;
- Figure 5 is an elevation view of a threaded pin and of the respective female screw element or insert in which it is subsequently inserted;
- Figures 6A and 6B are respectively a side view and a bottom plan view of a sealing element mounted on the base element and on the covering element;
- Figure 7 is a section view showing coupling between the covering element and a side wall of the box of Figure 1; and
- Figure 8 is a section view showing coupling between the base element and a side wall of the box of Figure 1.

### Mades for carrying out the Invention

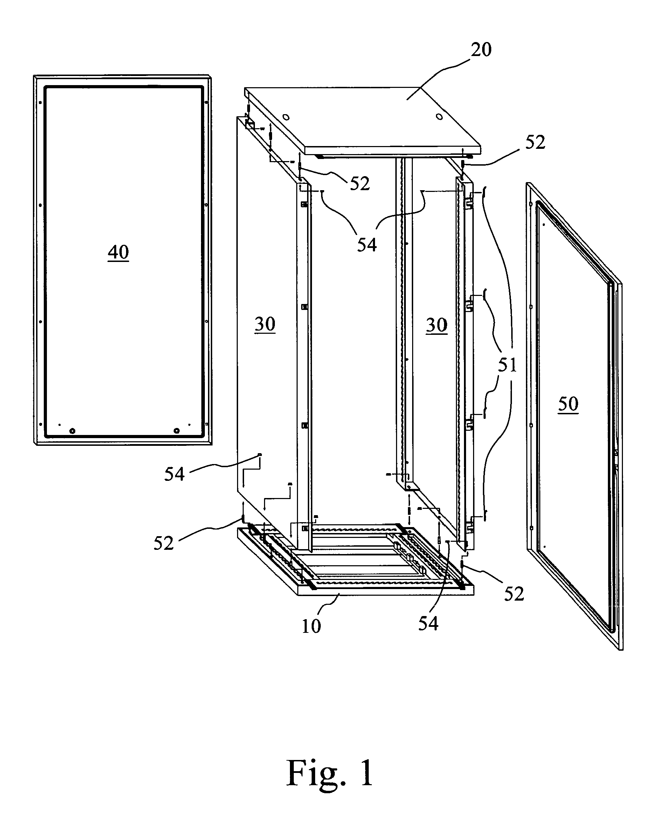

With reference to Figure 1, a sheet metal control box according to the present invention includes a base element 10, a covering element 20, a pair of side walls 30, a back wall 40 and a front door 50 mounted on one of the side walls 30 through hinge pins 51.

As will be explained in greater detail below, mounting of the side walls 30 to the base element 10 and to the covering element 20 is implemented by means of threaded pins 52 made integral with the base element 10 and with the covering element 20 in positions such as to offer, after assembly, a high degree of sturdiness and stability to the structure. Respective nuts 54 are then engaged by screwing onto the pins 52.

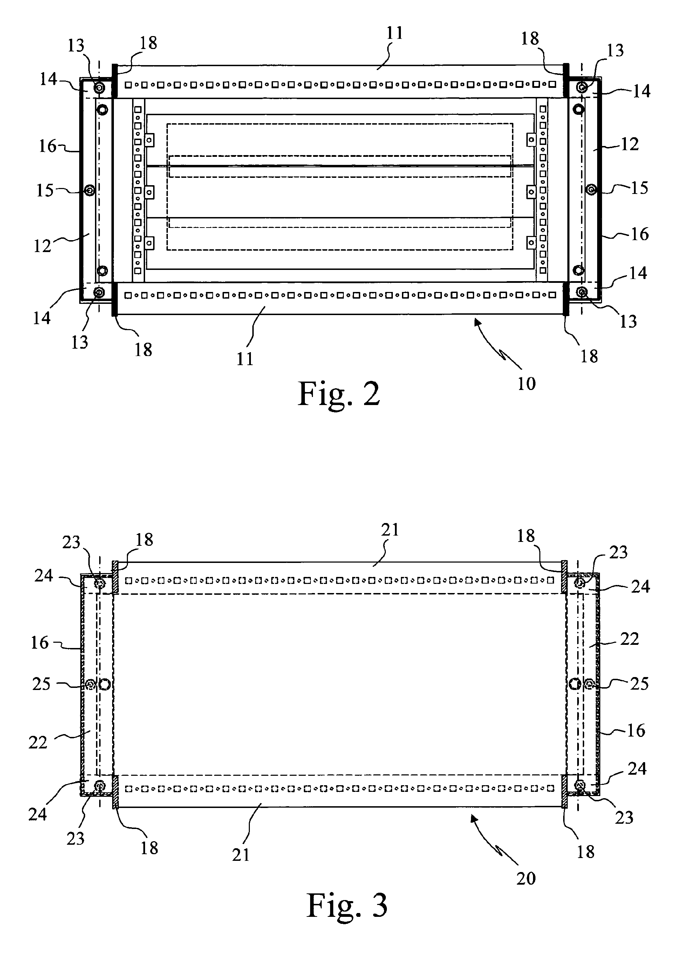

Figures 2 and 3 respectively represent a base element 10 and a covering element 20, both rectangular in shape.

The base element 10 has a perimeter frame formed of flat portions, i.e. portions perpendicular to the axes of the threaded pins 52, which includes a pair of longer sides 11 and a pair of shorter sides 12. The frame portions of the sides 11 include a series of holes and windows aligned according to the standard measurements provided for control boxes, while the frame portions 12 form the sides for coupling with the side walls 30.

The positions in which the threaded pins 52 are inserted are indicated in Figure 2 with the references 13 and 15. In the preferred embodiment, at least three pins are provided for each of the sides for coupling 12 present on the base element 10. At least one of the three pins is disposed along the side 12 in a central position 15 which is staggered with respect to a line that joins the corner positions 13 of the other two pins.

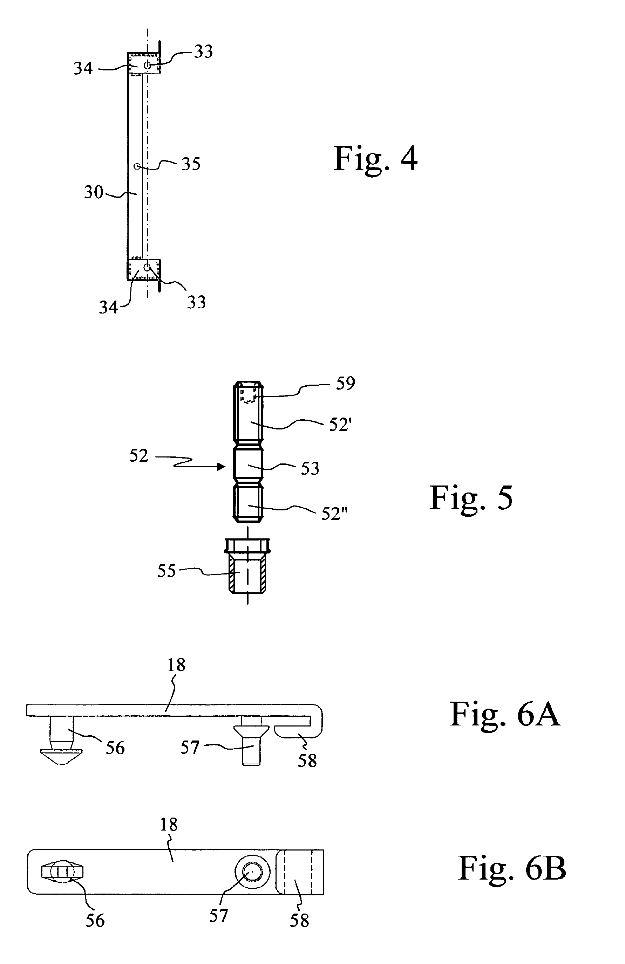

The same arrangement is found in the side walls 30 (Figure 4) with a central through hole 35 staggered with respect to the line that joins the other two corner holes 33.

As represented in Figure 5, the pins 52 are engaged in corresponding female screws disposed in the positions 13 and 15 and composed of inserts of the splitting type 55 constrained in hexagonal holes present in the sheet metal of the base element 10 through forced coupling. The threaded pins 52 are instead composed of grub screws with hexagonal slot 59 at one end and are engaged in the inserts 55 by means of coupling with doubled ended stud. Each pin 52 includes a threaded portion 52', in which the hexagonal slot 59 is produced, a threaded portion 52" intended to engage in the insert 55, and a smooth portion 53 interposed between the two threaded portions 52' and 52".

Returning to Figure 2, at least one sealing element is disposed on the sides for coupling 12 between the base element 10 and the side walls 30 which will abut on the sides for coupling 12. The sealing element includes, for example, a vulcanized rubber strip 16 which is applied automatically in continuous casting, during manufacture, in proximity of the outer edge of each of the sides for coupling 12. Transverse sealing elements 18, which extend perpendicularly to the rubber strip 16 and lie on the portions 11 of the frame, can be provided at the ends of each rubber strip 16.

The sealing elements 18 can, for example, be produced in soft PVC and shaped as shown in Figures 6A and 6B to facilitate and speed up mounting. In fact, appendages 56 and 57 are provided for insertion and pressure locking thereof in specific shaped holes present on the portions 11. An end portion 58 is wound around the edge of the sheet metal of the portions 11.

The covering element 20 represented in Figure 3 substantially presents the same characteristics of shape, dimensions and construction already shown for the base element 10.

Therefore, the covering element 20 also has a perimeter frame formed of flat portions having a pair of longer sides 21 identical to the longer sides 11 of the base element 10, and a pair of shorter sides 22 which form the sides for coupling with the side walls 30.

The positions 23 and 25 in which the threaded pins 52 are inserted correspond to the same positions 13 and 15 on the base element 10 and include the same female threads composed of inserts of the "splitting" type 55.

Also present on each side 22 is an identical vulcanized rubber strip 16 which is joined at the ends thereof with transverse seal elements 18 already described above.

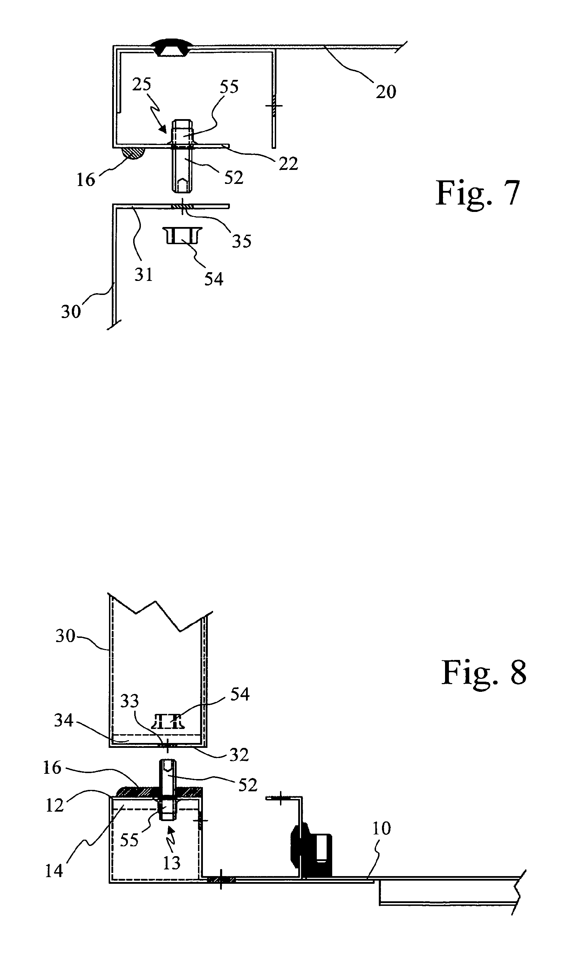

Figure 7 shows a sectional view of some details relative to assembly of a side wall 30 with a covering element 20 at the threaded pin 52 disposed in the central position 25 of the side for coupling 22.

The side wall 30 includes a bent flat portion 31 which abuts against the side for coupling 22 and in which a through hole 35 is provided for the respective pin 52. After having screwed the pins 52 into the corresponding inserts 55, the side wall 30 is mounted by screwing the nuts 54 onto the respective pins 52.

Figure 8 shows a sectional view of some details relative to assembly of a side wall 30 with a base element 10 at the threaded pin 52 disposed in the corner position 13 of the side for coupling 12.

The side wall 30, in the lower part thereof, includes a bent flat portion 32 which abuts against the side for coupling 12 and in which a through hole 33 is provided for the respective pin 52. After having screwed the pins 52 into the corresponding inserts 55, the side wall 30 is mounted by screwing the nuts 54 onto the respective pins 52.

It should be pointed out that, at least in the positions of the corner pins, reinforcing portions are preferably provided, composed of plates of greater thickness with respect to the thickness of the sheet metal and welded to this sheet metal in these positions. Figure 8 indicates, for example, the reinforcing portion 14 of the base element 10 and the reinforcing portion 34 of the side wall 30, also shown in Figures 2 and 4. The covering element 20 also presents identical reinforcing portions 24, visible in Figure 3.

In the practical embodiment, the box can, for example, be produced in sheet metal with a thickness of 1.5 mm and the reinforcing portions 14, 24 and 34 can for example be at least 5 mm thick.

In practice, assembly is implemented in a particularly rapid manner, if necessary with the aid of power tools, by first screwing the six threaded pins 52 into the corresponding inserts 55 of the base element 10 and of the covering element 20. Once the pins have been inserted in the side walls 30, it is sufficient to tighten the six nuts 54 to obtain a solid and sturdy structure. The remaining parts that form the complete box can then also be assembled, in particular the back wall 40 by means of the respective screws (not shown) engaged in the side walls 30 and the door mounted with its pins in the hinges 51 (Figure 1).

## Claims

1. A sheet metal control box, which includes a base element and a covering element, a pair of side walls, a back wall, at least one front door hinged to at least one of said side walls and constraining means to secure said side walls to said base element and to said covering element, **characterized in that** said constraining means include threaded pins made integral with said base element and with said covering element and nuts engaged by screwing onto said pins.

2. The box according to claim 1, wherein said base element and said covering element are quadrangular in shape and include a perimeter frame, composed of flat portions perpendicular to the axes of said threaded pins, said perimeter frame including at least two opposite sides for coupling with said side walls.

3. The box according to claim 1 or 2, wherein said side walls include flat bent portions along the sides for coupling with said base element and with said covering element, wherein said bent portions are provided with through holes for said pins, and wherein said nuts are screwed onto said pins and abutted against said bent portions.

4. The box according to any of the preceding claims, wherein reinforcing portions are provided, applied to said base element along said sides for coupling and at the positions of one or more of said threaded pins.

5. The box according to any of the preceding claims, wherein said reinforcing portions are provided, applied to the bent portions of said side walls at the positions of one or more of said threaded pins.

6. The box according to claim 1, wherein at least three threaded pins are provided for each of the sides for coupling on said base element and on said covering g element.

7. The box according to claim 6, wherein at least one of said threaded pins is disposed in a staggered position with respect to a line that joins other two of said pins.

8. The box according to claim 1, wherein said pins are made integral with said base element and with said covering element by means of coupling with double ended stud in female thread elements secured to said base clement and to said covering element.

9. The box according to any one of the preceding claims, wherein at least one sealing element is interposed between said bent portions of the side walls and the corresponding sides for coupling of said base element and of said covering element.
